# EUROPÄISCHE PATENTSCHRIFT

(11) **EP 0 708 023 B1**
(45) Veröffentlichungstag und Bekanntmachung des Hinweises auf die Patenterteilung: **03.12.1997**
(21) Anmeldenummer: 95113971.6
(22) Anmeldetag: 06.09.1995
(51) Int. Cl.: B65B 9/02, B65B 31/02, B65B 53/06, B65B 41/14

(54) **Verfahren und Vorrichtung zur Herstellung von Verpackungen**
Process and apparatus for making packages
Procédé et dispositif pour fabriquer des emballages

(30) Priorität: 17.10.1994 CH 3108/94
(43) Veröffentlichungstag der Anmeldung: 24.04.1996
(73) Patentinhaber: Heder, Eberhard G., 6312 Steinhausen (CH)
(72) Erfinder: Heder, Eberhard G., 6312 Steinhausen (CH)
(74) Vertreter: Hotz, Klaus, Dipl.-El.-Ing./ETH Patentanwalt

(56) Entgegenhaltungen:
- EP-A- 0 127 016
- EP-A- 0 311 213
- DE-A- 1 561 969
- GB-A- 1 131 745
- US-A- 4 069 643

## Beschreibung

Die Erfindung betrifft ein Verfahren zur Herstellung von Verpackungen nach dem Oberbegriff des Patentanspruchs **1** sowie eine Vorrichtung zur Durchführung dieses Verfahrens nach dem Oberbegriff des Patentanspruchs **4**.

Derartige Verpackungen in Form von beispielsweise aus flexiblen Kunststoffolien hergestellten Beuteln werden evakuiert, um eine längere Haltbarkeit des Verpackungsgutes, wie z.B. Fleisch, zu gewährleisten. Hierbei kann das Aussehen der nach dem Evakuieren verschweissten bzw. versiegelten Verpackung durch Verwendung einer wärmeschrumpfbaren Kunststoffolie verbessert werden, da nach einer Wärmebehandlung und der daraus resultierenden Schrumpfung der Folie Faltenbildung vermieden wird.

Beute der vorstehend erwähnten Art werden bei Verfahren bzw. Einrichtungen verwendet, wie sie beispielsweise mit der **EP-A-0 398 306** bekannt geworden sind. Als nachteilig ist hierbei anzusehen, dass je nach Grösse des Verpackungsgutes verschieden grosse Beute hergestellt und an Lager gelegt werden müssen. Weiterhin ist das Einbringen des Verpackungsgutes in die Beute bevor diese in eine Vakuumkammer gelegt werden mit nicht unerheblichem Aufwand verbunden.

Mit der **EP-A-0 569 933** ist eine Verpackungsmaschine bekannt geworden, bei der entlang einer Transporteinrichtung eine Formstation, eine Evakuier- und Versiegelungsstation und eine Schneidestation angeordnet sind. Die Transporteinrichtung in Form einer von einem Motor angetriebenen Endloskette ergreift an der Eingangsseite der Maschine ein Materialbahn und führt diese durch die verschiedenen Arbeitsstationen bis zur Ausgangsseite der Maschine. In der Formstation werden aus der Materialbahn durch Tiefziehen Mulden gebildet, die anschliessend mit dem Verpackungsgut bestückt werden. Nach dem Durchlaufen der Evakuier- und Versiegelungsstation werden in der Schneidestation die fertiggestellten Verpackungen voneinander getrennt.

Mit vorstehend beschriebener Verpackungsmaschine können lediglich Verpackungen gleicher Grösse, die auf den grössten zu verpackenden Gegenstand abgestimmt sein muss, hergestellt werden. Ausserdem muss wie beispielsweise aus der **EP-A-0 127 016** ersichtlich die Mulde in der Evakuier- und Versiegelungsstation mit einer Abdeckung versehen werden, wodurch der fertigungstechnische Aufwand erheblich gesteigert wird.

Eine aus der **EP-A-0 311 213** bekannte Vorrichtung besitzt eine Schweiss- und Schneideeinrichtung und ein erstes Förderband für den Transport einer von einer Rolle abwickelbaren ersten Materialbahn. Eine zweite Materialbahn wird mit der ersten Materialbahn so zusammengeführt, dass das Verpackungsgut auf der ersten Materialbahn aufliegt und von der zweiten Materialbahn überdeckt wird, wobei die zweite Materialbahn im Bereich um das Verpackungsgut mit der ersten Materialbahn in Kontakt gebracht wird. Die Verbindung der beiden Materialbahnen erfolgt durch Verschweissung.

Die **US-A-4,069,643** beschreibt eine Vorrichtung zur Erstellung von Verpackungen, insbesondere für Verpackungsgut in unterschiedlichen Formen und Grössen wie beispielsweise Fleisch. Hierbei wird aus zwei Materialbahnen eine Art Schlauch gebildet, dessen Abschnitte schliesslich das Verpackungsmaterial bilden und in welchen das Verpackungsgut eingebracht werden muss, bevor die Verpackung evakuiert und fertiggestellt wird.

Die erste Aufgabe der Erfindung wird somit darin gesehen, ein Verfahren der eingangs genannten Art vorzuschlagen, welches nicht nur die Herstellung einer einfach produzierbaren, das Verpackungsgut dicht umschliessende Verpackung erlaubt sondern ausserdem zur längeren Haltbarkeit der Verpackungsgutes beiträgt. Die zweite Aufgabe der Erfindung besteht darin, ausgehend von einem Stand der Technik gemäss der **EP-A-0 311 213** eine verbesserte Vorrichtung zur Herstellung einer solchen Packung zuschaffen.

Diese Aufgaben werden durch die Merkmale der kennzeichnenden Teile der Patentansprüche 1 bzw. 4 gelöst. Die jeweiligen abhängigen Patentansprüche betreffen vorteilhafte Weiterbildungen bzw. bevorzugte Ausführungsbeispiele der Erfindung.

Nach einer vorteilhaften Ausbildung der Erfindung werden die zweite Schweissnaht einer vorhergehenden und die erste Schweissnaht einer nachfolgenden Verpackung gleichzeitig hergestellt und die Materialbahnen zwischen den beiden Schweissnähten getrennt.

Die mit der Erfindung erzielten Vorteile sind darin zu sehen, dass während des Verpackungsprozesses Verpackungen erzeugt werden, die der Grösse des Verpackungsgutes angepasst sind. Das vorgeschlagene Verfahren kann daher beispielsweise mit grossem Vorteil bei der Verpackung von in der Grösse häufig stark schwankenden Fleischstücken angewendet werden. Mit der Erfindung wird weiterhin erreicht, dass keine Beutel oder andere Verpackungsbehälter verschiedener Grössen benötigt werden. Dadurch werden eine aufwendige Lagerhaltung und je nach Herstellungsart die Umbestückung der Maschine bei Änderung der Grösse des Verpackungsgutes vermieden, so dass Kosten gespart werden können.

Im folgenden wird die Erfindung anhand eines Ausführungsbeispieles in Verbindung mit der Zeichnung näher erläutert. Es zeigen:
- **Fig.1a**: Eine Seitenansicht einer ersten Arbeitsstation der Vorrichtung in vereinfachter Darstellung,
- **Fig.1b**: die erste Arbeitsstation gemäss **Fig.1a** während eines ersten Verfahrensschrittes,
- **Fig.1c**: die erste Arbeitsstation gemäss **Fig.1a** während eines zweiten Verfahrensschrittes,
- **Fig.1d**: die erste Arbeitsstation gemäss **Fig.1a** während eines dritten Verfahrensschrittes,
- **Fig.1e**: die erste Arbeitsstation gemäss **Fig.1a** während eines vierten Verfahrensschrittes,
- **Fig.2a 2b**: eine schematische Darstellung einer Schweiss- und Schneideeinrichtung der ersten Arbeitsstation in zwei Arbeitsstellungen,
- **Fig.3**: einen Grundriss der ersten Arbeitsstation gemäss den **Fig.1a-1e**,
- **Fig.4**: eine Seitenansicht der Vorrichtung in vereinfachter Darstellung,
- **Fig.5**: einen Grundriss der Vorrichtung gemäss **Fig.4**,
- **Fig.6**: eine schematische Darstellung einer zweiten Arbeitsstation der Vorrichtung, und
- **Fig.7**: einen Grundriss der zweiten Arbeitsstation gemäss **Fig.6** in vereinfachter Darstellung.

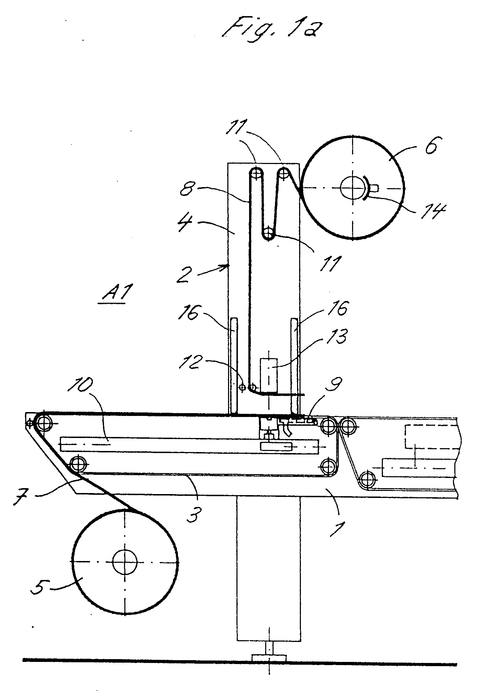

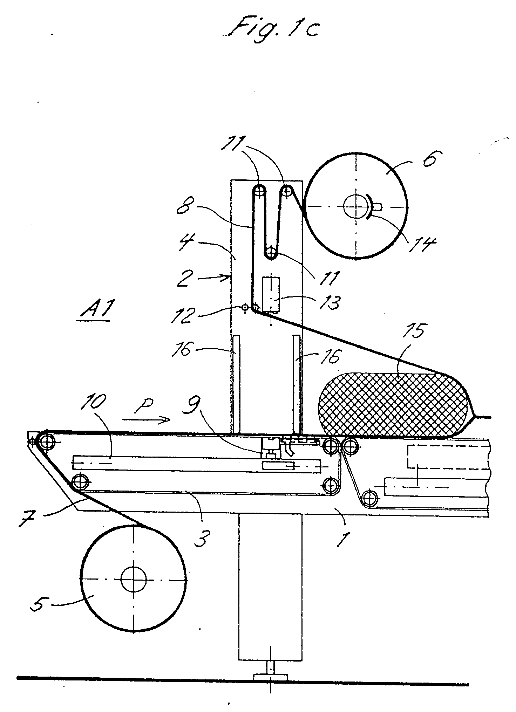

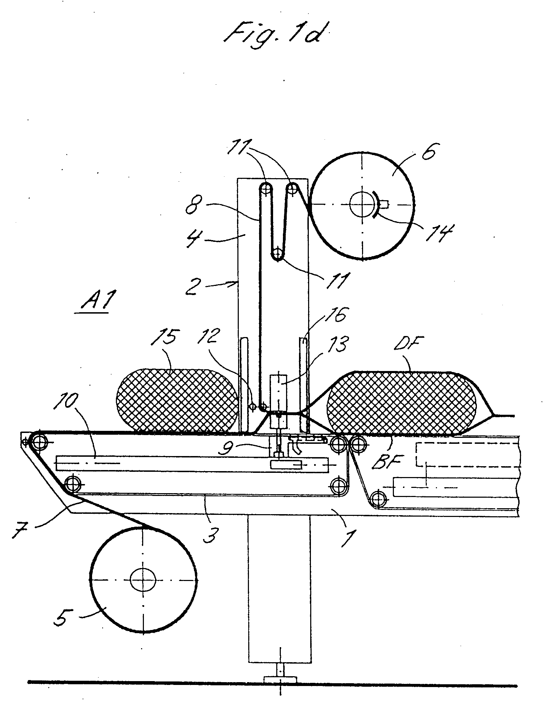

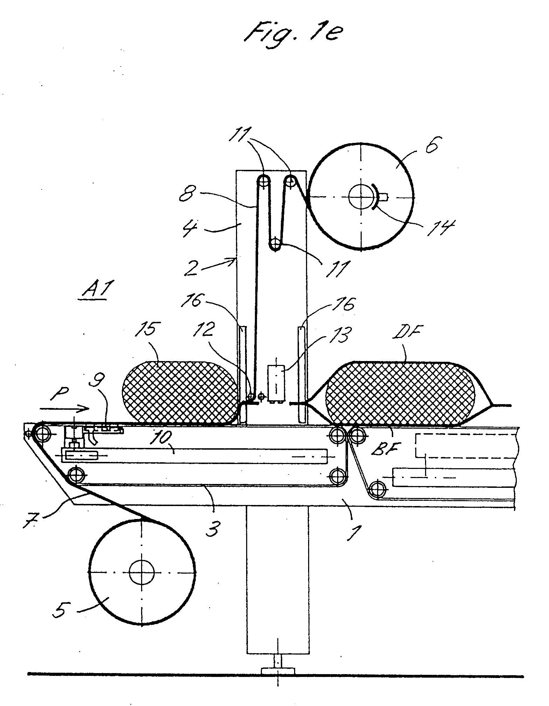

In den **Fig.1a-1e** ist mit **1** ein Maschinengestell bezeichnet, an dem eine erste Arbeitsstation **A1** angeordnet ist, die eine Schweiss- und Schneideeinrichtung **2** und ein erstes Förderband **3** aufweist. Auf drehbar am Maschinengestell **1** bzw. an einem. Träger **4** der Schweiss- und Schneideeinrichtung **2** gelagerten Rollen **5** und **6** sind Materialbahnen **7** und **8** aufgewickelt, die beispielsweise aus einer flexiblen schrumpffähigen Kunststoffolie bestehen. Die erste Materialbahn **7**, aus welcher Bodenflächen **BF** der Verpackungen gebildet werden, wird von einem Mitnehmer **9** mitgenommen, der in einer Führung **10** des Maschinengestells **1** verschiebbar angeordnet und mit dem Förderband **3** gekoppelt ist. Die zweite Materialbahn **8**, aus welcher Deckflächen **DF** der Verpackungen gefertigt werden, wird über am Träger **4** gelagerte Umlenkrollen **11, 12** einer in senkrechter Richtung verschiebbaren Schweissleiste **13** der nachfolgend anhand der **Fig.2a, 2b** näher beschriebenen Schweiss- und Schneideeinrichtung **2** zugeführt. An der die Materialbahn **8** tragenden Rolle **6** ist eine Bremse **14** angeordnet. Mit **15** ist Verpackungsgut beispielsweise in Form von Fleischstücken bezeichnet, das auf der Materialbahn **7** aufgesetzt wird. Die Materialbahnen **7** und **8** werden während eines ersten Verfahrenschrittes durch eine quer zu den Materialbahnen **7, 8** verlaufende erste Schweissnaht (**29, Fig.3**) miteinander verbunden, so dass die Materialbahn **8** von der Materialbahn **7** im Verlaufe des Verpackungsvorganges mitgezogen wird und beide Materialbahnen **7, 8** sich synchron bewegen. Mit **16** sind Überwachungseinrichtungen, z.B. Lichtschranken, bezeichnet, die mit nicht weiter beschriebenen Steuerungseinrichtungen zusammenwirken.

Gemäss den **Fig.2a, 2b** und **3** sind in der Schweissleiste **13** der Schweiss- und Schneideeinrichtung **2** zwei Schweisselektroden **20, 21** in Schlitzen **22, 23** geführt. Die Schweisselektroden **20, 21** stehen unter der Einwirkung von Federn **24, 25**, die in den Schlitzen **22, 23** angeordnet sind. Zwischen den Schweisselektroden **20, 21** ist ein Messer **26** vorgesehen, das mit der Schweissleiste **13** fest verbunden ist. Mit **27** ist eine im Mitnehmer **9** angeordnete, in senkrechter Richtung verschiebbare Auflageleiste bezeichnet, die in der Mitte einen Schlitz **28** für die Aufnahme des Messers **26** aufweist. Beim Verschweissen der Materialbahnen **7, 8** werden die Schweissleiste **13** und die Auflageleiste **27** gegeneinander bewegt (**Fig.2b**), wobei durch die eine Schweisselektrode **20** die erste Schweissnaht **29** einer nachfolgenden Verpackung und durch die andere Schweisselektrode **21** eine zweite, parallel zur ersten verlaufende Schweissnaht **30** einer vorhergehenden Verpackung erzeugt wird (**Fig.3**). Während einer weiteren Abwärtsbewegung der Schweissleiste **13** gegen die Kraft der Federn **24, 25** werden die Materialbahnen **7, 8** mittels des Messers **26** in der Mitte zwischen den beiden Schweissnähten **29, 30** durchgeschnitten. Der Mitnehmer **9** weist eine Unterdruckkammer **31** auf, die über einen Sauganschluss **32** mit einer nicht weiter dargestellten Vakuumpumpe verbunden ist. In der Unterdruckkammer **31** sind gegen die Unterseite der auf dem ersten Förderband **3** aufliegenden Materialbahn **7** gerichtete Saugdüsen **33** vorgesehen. Die Auflageleiste **27** ist derart im Mitnehmer **9** angeordnet, dass bei in einer Schweissposition befindlichen Auflageleiste **27** die Unterdruckkammer **31** unter der Bodenfläche BF einer vorhergehenden Verpackung liegt. Das erste Förderband **3** besteht vorzugsweise aus einer Rollenkette, die mindestens so breit wie die Materialbahnen **7, 8** ist und deren Rollen **34** leichtgängig, z.B. durch Kugellager, gelagert sind.

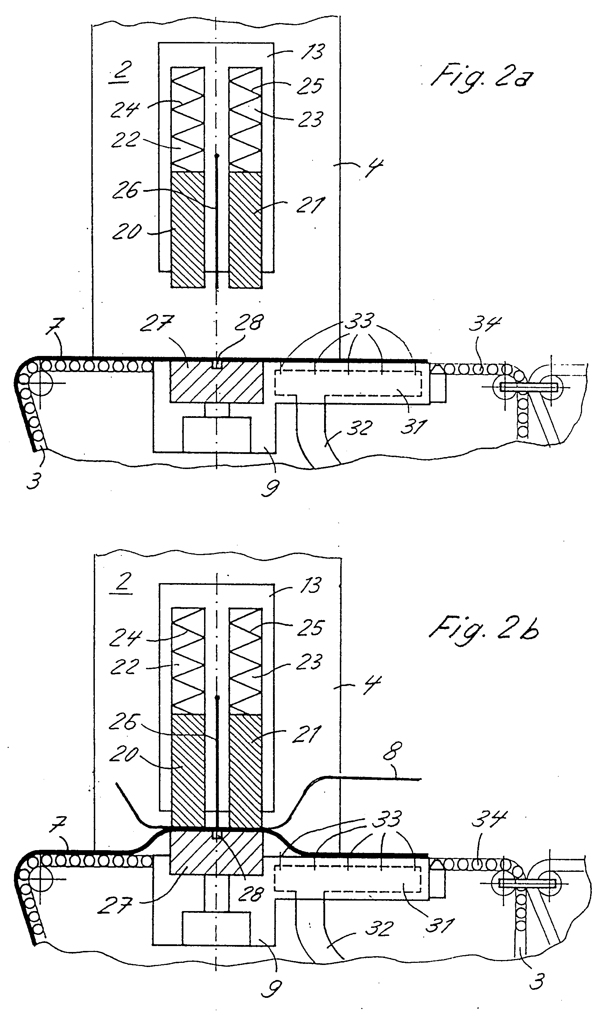

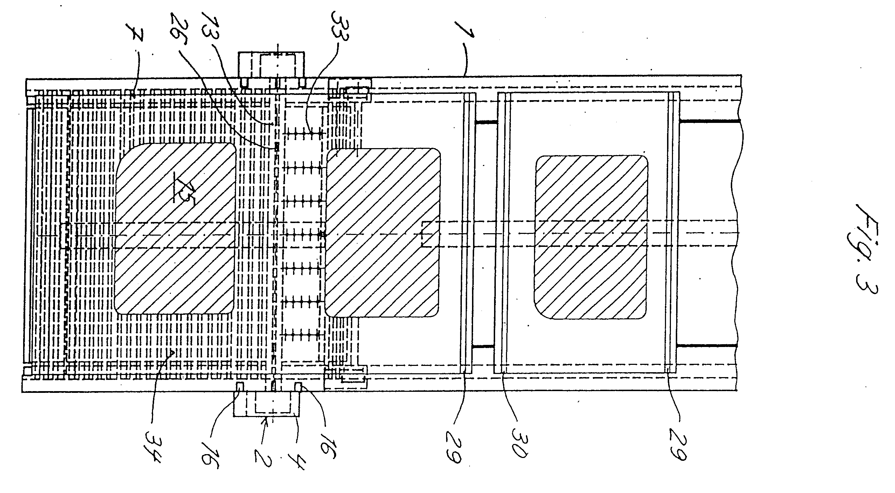

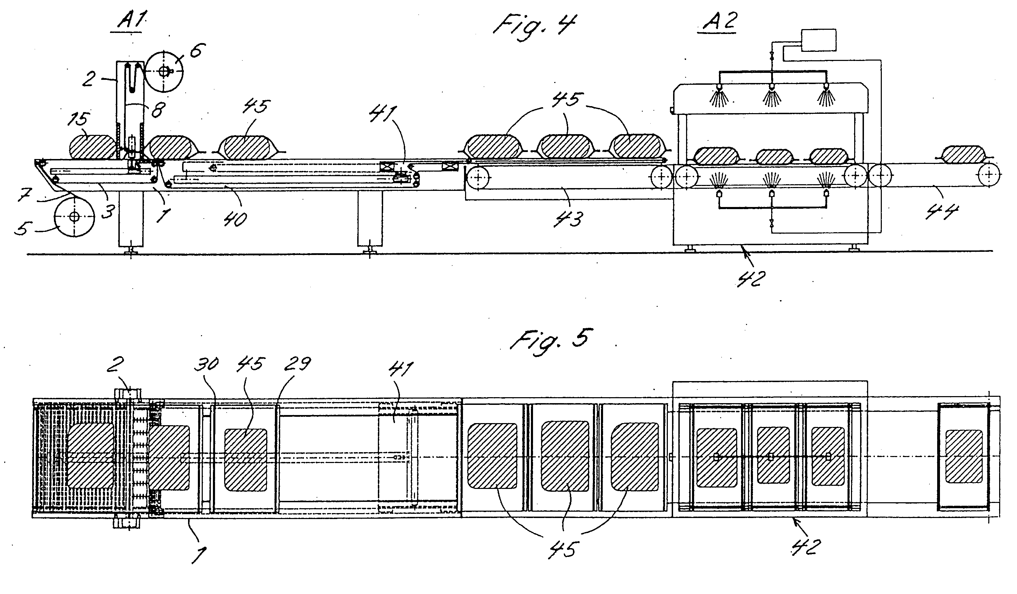

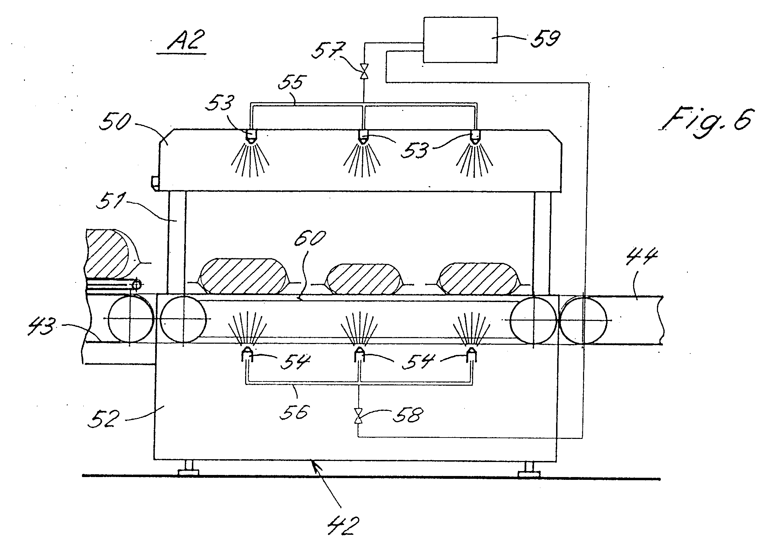

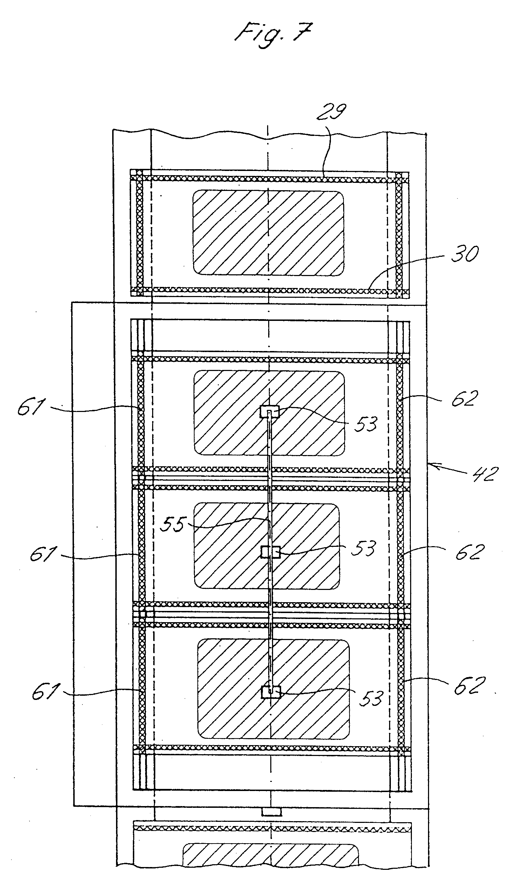

Wie aus den **Fig.4** und **5** ersichtlich, ist am Maschinengestell **1** unmittelbar an das erste Förderband **3** anschliessend ein zweites Förderband **40** angeordnet, das die vom ersten Förderband **3** ablaufenden Verpackungen übernimmt. Das zweite Förderband **40** kann mittels einer im Maschinengestell **1** horizontal geführten Verschiebeeinrichtung **41** teleskopartig verlängert bzw. verkürzt werden. Eine nachstehend anhand der **Fig.6** und **7** näher beschriebene zweite Arbeitsstation **A2** weist eine Vakuumkammer **42** auf, an welcher eingangsseitig ein drittes Förderband **43** und ausgangsseitig ein viertes Förderband **44** angeordnet sind. Das dritte Förderband **43** ist derart angeordnet, dass das zweite Förderband **40** mittels der Verschiebeeinrichtung **41** darüber geschoben werden kann. Bei Beschickung der Vakuumkammer **42** wird das zweite Förderband **40** zurückgezogen, wobei darauf befindliche Verpackungen **45** auf das dritte Förderband **43** abgesetzt und in die Vakuumkammer **42** gefördert werden können.

In den **Fig.6** und **7** ist mit **50** ein Oberteil der im geöffneten Zustand dargestellten Vakuumkammer **42** bezeichnet, das mittels Führungsstangen **51** auf ein Unterteil **52** der Vakuumkammer **42** abgesenkt werden kann. Im Ober- und Unterteil **50, 52** sind Düsen **53** bzw. **54** vorgesehen, die über Leitungen **55, 56** und Ventile **57, 58** mit einem Dampferzeuger **59** verbunden sind. Durch die Düsen **53, 54** wird zur Schrumpfung des Verpackungsmaterials überhitzter Wasserdampf in die Vakuumkammer **42** geleitet. In der Vakuumkammer **42** ist ein fünftes Förderband **60** angeordnet, das zwecks Durchtritt des Wasserdampfes aus einem Stabgeflechtband besteht. Mit **61, 62** sind eine dritte und eine vierte Schweissnaht bezeichnet, mittels welchen die Boden- und Deckflächen **BF, DF** der Verpackungen an den längs zu den Materialbahnen **7, 8** verlaufenden Seiten miteinander verbunden werden. Die Schweissnähte **61, 62** werden durch nicht weiter dargestellte in der Vakuumkammer **42** angeordnete Schweisseinrichtungen erzeugt.

Bei der Herstellung der Verpackung wird wie folgt verfahren:

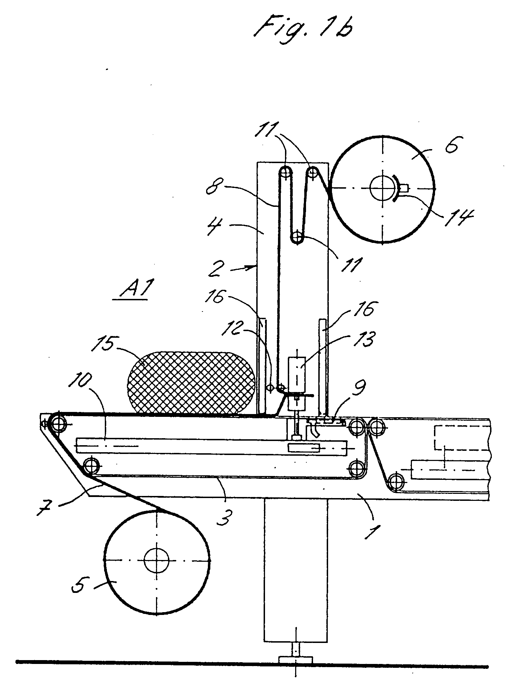

In einem ersten Verfahrensschritt werden die zwei Materialbahnen **7, 8** mittels der Schweiss- und Schneideeinrichtung **2** durch die erste Schweissnaht **29** miteinander verbunden und das Verpackungsgut **15** auf die erste Materialbahn **7** aufgesetzt (**Fig.1b**). Danach wird die Schweiss- und Schneideeinrichtung **2** geöffnet und der Mitnehmer **9** mittels des ersten Förderbandes **3** entgegen der Pfeilrichtung **P** in eine Ausgangsposition (**Fig.1e**) verschoben. Die an der Rolle **6** angebrachte Bremse **15** verhindert hierbei, dass die Materialbahnen **7, 8** entgegen der Pfeilrichtung **P** mitgezogen werden. Nach Erreichen der Ausgangsposition wird die Unterdruckkammer **31** des Mitnehmers **9** evakuiert, so dass die Materialbahn **7** durch die Saugdüsen **33** am ersten Förderband **3** festgehalten wird. Das Transportband **3** wird nun in Pfeilrichtung **P** angetrieben, wobei die Materialbahn **8** von der Materialbahn **7** mitgezogen wird, so dass beide Materialbahnen **7, 8** synchron bewegt werden und das Verpackungsgut **15** in einem zweiten Verfahrensschritt bei geöffneter Schweiss- und Schneideeinrichtung **2** weiter transportiert wird, bis der Mitnehmer **9** bzw. die Auflageleiste **27** die Schweissposition wieder erreicht hat (**Fig.1c**). Sodann wird in einem dritten Verfahrensschritt durch Schliessen der Schweiss- und Schneideeinrichtung **2** die Materialbahn **8** über das Verpackungsgut **15** gezogen und durch die zweite Schweissnaht **30** mit der Materialbahn **7** verbunden (**Fig.1d**). Gleichzeitig wird die erste Schweissnaht **29** der nachfolgenden Verpackung erzeugt. Anschliessend werden in einem vierten Verfahrensschritt die Materialbahnen **7, 8** in der Mitte zwischen den beiden Schweissnähten **29, 30** durchgeschnitten, worauf die Schweiss- und Schneideeinrichtung **2** wieder geöffnet und der Mitnehmer **9** vom ersten Transportband **3** in die Ausgangsposition geschoben wird (**Fig.1e**). Die derartig vorgefertigten Verpackungen **45** werden vom zweiten Förderband **40** weiter transportiert und in einer bestimmten, von der Grösse des Verpackungsgutes abhängigen Anzahl auf das dritte Förderband **43** abgesetzt (**Fig.4, 5**). Mittels des dritten Förderbandes **43** werden die Verpackungen dem in der Vakuumkammer **42** befindlichen fünften Förderband **60** übergeben, wobei nach der Evakuierung die Boden- und Deckflächen **BF, GF** der Verpackungen an den Seiten durch die dritte und vierte Schweissnaht **61, 62** miteinander verbunden werden und die Wärmeschrumpfung des Verpackungsmaterials durchgeführt wird. Nach dem Belüften und Öffnen der Vakuumkammer **42** werden die fertigen Verpackungen vom fünften Förderband **60** auf das vierte Förderband **44** geschoben, von welchem sie abgenommen werden können.

| Bezugszeichenliste | |
|---|---|
| 1 Maschinengestell | 40 Zweites Förderband |
| 2 Schweiss- und Schneideeinrichtung | 41 Verschiebeeinrichtung |
| | 42 Vakuumkammer |
| 3 Erstes Förderband | 43 Drittes Förderband |
| 4 Träger | 44 Viertes Förderband |
| 5 Rolle | 45 Verpackungen |
| 6 Rolle | |
| 7 Erste Materialbahn | 50 Oberteil |
| 8 Zweite Materialbahn | 51 Führungsstangen |
| 9 Mitnehmer | 52 Unterteil |
| 10 Führung | 53 Düsen |
| 11 Umlenkrollen | 54 Düsen |
| 12 Umlenkrollen | 55 Leitungen |
| 13 Schweissleiste | 56 Leitungen |
| 14 Bremse | 57 Ventil |
| 15 Verpackungsgut | 58 Ventil |
| 16 Überwachungseinrichtung | 59 Dampferzeuger |
| | 60 Fünftes Förderband |
| 20 Schweisselektrode | 61 Dritte Schweissnaht |
| 21 Schweisselektrode | 62 Vierte Schweissnaht |
| 22 Schlitz | |
| 23 Schlitz | A1 Erste Arbeitsstation |
| 24 Feder | A2 Zweite Arbeitsstation |
| 25 Feder | BF Bodenfläche |
| 26 Messer | DF Deckfläche |
| 27 Auflageleiste | P Pfeilrichtung |
| 28 Schlitz | |
| 29 Erste Schweissnaht | |
| 30 Zweite Schweissnaht | |
| 31 Unterdruckkammer | |
| 32 Sauganschluss | |
| 33 Saugdüsen | |
| 34 Rollen | |

## Patentansprüche

1. Verfahren zur Herstellung von Verpackungen (**45**), wobei Verpakkungsgut (**15**) unter Anwendung von Vakuum und Wärmeschrumpfung von Verpackungsmaterial sowie durch Verschweissung bzw. Versiegelung einer Verpackungsöffnung luftdicht verpackt wird,
- indem zwei synchron bewegbare Materialbahnen (**7, 8**) durch eine quer zu den Materialbahnen (**7, 8**) vertaufende erste Schweissnaht (**29**) miteinander verbunden werden, wobei die erste Materialbahn (**7**) der Bildung von Bodenflächen (**BF**) und die zweite Materialbahn (**8**) der Bildung von Deckflächen der Verpackungen dient,
- indem die erste Materialbahn (**7**) angetrieben und die zweite Materialbahn (**8**) dabei mitgezogen wird,
- indem das Verpackungsgut (**15**) hinter der ersten Schweissnaht (**29**) auf der ersten Materialbahn (**7**) aufgesetzt wird,
- indem die Materialbahnen (**7, 8**) hinter dem Verpackungsgut (**15**) durch eine parallel zur ersten Schweissnaht (**29**) verlaufende zweite Schweissnaht (**30**) miteinander verbunden werden, und
indem die Materialbahnen (**7, 8**) hinter der zweiten Schweissnaht (**30**) voneinander getrennt werden,
**dadurch gekennzeichnet,**
- dass nach anschliessender Evakuierung die Bodenfläche (**BF**) und die Deckfläche (**DF**) an den längs zu den Materialbahnen (**7, 8**) verlaufenden Seiten durch eine dritte Schweissnaht (**61**) und eine vierte Schweissnaht (**62**) miteinander verbunden und die Wärmeschrumpfung durchgeführt wird, und
- dass die Bewegungsübertragung auf die erste Materialbahn (**7**) pneumatisch durch Erzeugung eines Unterdruckes an der Unterseite der ersten Materialbahn (**7**) mittels eines verschiebbar angeordneten Mitnehmers (**9**) erfolgt.

2. Verfahren nach Patentanspruch **1,**
**dadurch gekennzeichnet,**
dass gleichzeitig mit der zweiten Schweissnaht (**30**) der Verpackung die erste Schweissnaht (**29**) der nachfolgenden Verpackung erzeugt wird und die Trennung der Materialbahnen zwischen der zweiten Schweissnaht (**30**) der Verpackung und der ersten Schweissnaht (**29**) der nachfolgenden Verpackung erfolgt.

3. Verfahren nach Patentanspruch **1,**
**dadurch gekennzeichnet,**
dass die Materialbahnen (**7, 8**) abgebremst bewegt werden.

4. Vorrichtung zur Durchführung des Verfahrens nach Patentanspruch **1**, umfassend
- eine Schweiss- und Schneideeinrichtung (**2**),
- mindestens ein erstes Förderband (**3**) für den Transport einer von einer Rolle **5**) abwickelbaren ersten Materialbahn (**7**),
- eine zweite, von einer weiteren Rolle (**6**) abwickelbare zweite Materialbahn (**8**), und
- ein letztes Förderband (**44**) für die Abgabe der fertigen Verpackungen (**45**)
**dadurch gekennzeichnet,** dass
- das erste Förderband (**3**) mit einem in einer Führung (**10**) eines Maschinengestells (**1**) verschiebbar angeordneten Mitnehmer (**9**) gekoppelt ist, der die erste Materialbahn (**7**) zwecks Verbindung mit der zweiten Materialbahn (**8**) durch erste Schweissnähte (**29**) und zweite Schweissnähte (**30**) bei Bewegung des ersten Förderbandes (**3**) zur Schweiss- und Schneideeinrichtung (**2**) transportiert,
wobei
- der Mitnehmer (**9**) eine Unterdruckkammer (**31**) aufweist, die über einen Sauganschluss (**32**) mit einer Vakuumpumpe verbindbar ist, und in der Unterdruckkammer (**31**) Saugdüsen (**33**) vorgesehen sind, die gegen die Unterseite der auf dem ersten Förderband (**3**) aufliegenden ersten Materialbahn (**7**) gerichtet sind, - dass hinter der Schweiss- und Schneideeinrichtung (**2**) ein an das erste Förderband (**3**) anschliessendes zweites Förderband (**40**) angeordnet ist, um die vom ersten Förderband (**3**) ablaufenden, mit den ersten Schweissnähten (**29**) und den zweiten (**30**) Schweissnähten versehenen Verpackungen (**45**) zu übernehmen,
- dass ein an das zweite Förderband (**40**) anschliessendes drittes Förderband (**43**) vorgesehen ist, um die vom zweiten Förderband (**40**) übernommenen Verpackungen (**45**) in eine Vakuumeinrichtung (**42**) zu transportieren,
- dass in der Vakuumkammer (**42**) Schweisseinrichtungen vorgesehen sind, durch welche die Bodenflächen (**BF**) und die Deckflächen(**DF**) an den längs zu den Materialbahnen (**7**, **8**) verlaufenden Seiten durch eine dritte Schweissnaht (**61**) und eine vierte Schweissnaht (**62**) miteinander verbindbar sind, und
- dass das letzte, vierte Förderband (**44**) an der Vakuumeinrichtung (**42**) angeschlossen ist.

5. Vorrichtung nach Patentanspruch **4**,
**dadurch gekennzeichnet,**
- dass im Maschinengestell (**1**) eine Verschiebeeinrichtung (**41**) horizontal geführt ist, mittels welcher das zweite Förderband (**40**) teleskopartig verlängert bzw. verkürzt werden kann, und
- dass das dritte Förderband (**43**) derart angeordnet ist, dass das zweite Förderband (**40**) mittels der Verschiebeeinrichtung (**41**) darüber geschoben werden kann.

6. Vorrichtung nach den Patentansprüchen **4** und **5**,
wobei die Schweiss- und Schneideeinrichtung (**2**) eine senkrecht verschiebbare Schweissleiste (**13**), eine Auflageleiste (**27**) und ein Messer (**29**) aufweist,
**dadurch gekennzeichet,**
- dass die Schweissleiste (**13**) zwei Schweisselektroden (**20, 21**) aufweist, wobei durch die eine Schweisselektrode (**20**) die erste Schweissnaht (**29**) einer nachfolgenden Verpackung und durch die andere Schweisselektrode (**21**) die zweite Schweissnaht (**30**) vorangehenden Verpackung erzeugbar ist,
- dass die Schweisselektroden (**20, 21**) in Schlitzen (**22, 23**) der Schweissleiste (**13**) geführt werden, in welchen Federn (**24, 25**) angeordnet sind, und
- dass die Auflageleiste (**27**) derart senkrecht verschiebbar im Mitnehmer (**9**) angeordnet ist, dass bei in einer Schweissposition befindlichen Auflageleiste (**27**) die Unterdruckkammer (**31**) unter der Bodenfläche (**BF**) einer vorangehenden Verpackung liegt.

7. Vorrichtung nach Patentanspruch **4**,
**dadurch gekennzeichnet,**
dass mindestens an der die zweite Materialbahn (**8**) tragenden Rolle (**6**) eine Bremse (**14**) angeordnet ist.

8. Vorrichtung nach Patentanspruch **4,**
**dadurch gekennzeichnet,**
dass in der Vakuumkammer (**42**) ein fünftes Förderband (**60**) angeordnet ist, das aus einem Stabgeflechtband besteht.

9. Vorrichtung nach Patentanspruch **4,**
**dadurch gekennzeichnet,**
dass das erste Förderband (**3**) aus einer Rollenkette besteht, die mindestens so breit wie die Materialbahnen (**7, 8**) ist.

## Claims

1. Process for manufacturing packaging (45) in which goods to be packaged (15) are packaged airtight by means of vacuum and heat-shrinking of packaging material as well as by welding or sealing a packaging opening,
- in that two synchronously movable lengths of material (7, 8) are joined by a first welding seam (29) which extends transversely to the lengths of material (7, 8), and the first length of material (7) serves to form bottom surfaces (BF), and the second length of material (8) serves to form cover surfaces of packaging;
- in that the first length of material (7) is driven and the second length of material (8) is pulled along;
- in that the goods to be packaged (15) are placed behind the first welding seam (29) on the first length of material (7);
- in that the lengths of material (7, 8) are joined behind the goods to be packaged (15) by a second welding seam (30) which extends parallel to the first welding seam (29); and
- in that the lengths of material (7, 8) are separated from each other behind the second welding seam (30),
**characterised in that**
- after subsequent evacuation, the bottom surface (BF) and the cover surface (DF) are at the sides extending alongside the lengths of material (7, 8) joined together by a third welding seam (61) and a fourth welding seam (62), and heat-shrinking is carried out; and
- the transfer of movement onto the first length of material (7) is performed pneumatically by generating a negative pressure at the bottom side of the first length of material (7) by means of a displaceably arranged pickup (9).

2. Process according to Claim 1,
**characterised in that**
simultaneously with the second welding seam (30) of the packages, the first welding seam (29) of subsequent packaging is produced, and separation of the lengths of material between the second welding seam (30) of the packaging and the first welding seam (29) of the subsequent packaging is carried out.

3. Process according to Claim 1,
**characterised in that**
the movement of the lengths of material (7, 8) is slowed down.

4. Device for carrying out the process of Claim 1,
comprising
- a welding and cutting device (2);
- at least a first conveyer belt (3) for transporting a first length of material (7) reeled off a roll (5);
- a second length of material (8) reeled of a further roll (6); and
- a final conveyer belt (44) for dispensing completed packaging (45).
**characterised in that**
- the first conveyer belt (3) is coupled to a pickup (9), which is displaceably arranged in a guide (10) of a machine frame (1) and which transports the first length of material (7) for the purpose of joining with the second length of material (8) by first welding seams (29) and second welding seams (30) during movement of the first conveyer belt (3) towards the welding and cutting device (2); and
- the pickup (9) comprises a negative pressure chamber (31) which is connectable via a vacuum connection (32) to a vacuum pump, and in the negative pressure chamber (31) are provided vacuum nozzles (33) which are oriented towards the bottom side of the first length of material (7) which is placed on the first conveyer belt (3);
- behind the welding and cutting device (2) is arranged a second conveyer belt (40) adjacent the first conveyer belt (3) for picking up packaging (45) which has been fitted with first welding seams (29) and second welding seams (30) and is running off the first conveyer belt (3);
- a third conveyer belt (43), which is adjacent the second conveyer belt (40), is provided for transporting packaging (45) taken over from the second conveyer belt (40) into a vacuum device (42);
- in the vacuum chamber (42) are provided welding devices by means of which the bottom surfaces (BF) and the cover surfaces (DF) can be joined at the sides extending along the lengths of material (7, 8) by a third welding seam (61) and a fourth welding seam (62); and
- the last and fourth conveyer belt (44) is connected to the vacuum device (42).

5. Device according to Claim 4,
**characterised in that**
- in the machine frame (1) a displacement mechanism (41) is horizontally guided, by means of which the second conveyer belt (40) can be telescopically extended or retracted; and
- the third conveyer belt (43) is arranged in such a manner that the second conveyer belt (40) can be pushed thereonto by means of the displacement mechanism (41).

6. Device according to Claims 4 and 5,
and the welding and cutting device (2) comprises a vertically displaceable welding ledge (13), a seating ledge (27) and a knife (29),
**characterised in that**
- the welding ledge (13) comprises two welding electrodes (20, 21), and the one welding electrode (20) produces the first welding seam (29) of subsequent packaging, and the other welding electrode (21) produces the second welding seam (30) of a previous packaging;
- the welding electrodes (20, 21) are guided in slots (22, 23) of the welding ledge (13) in which springs (24, 25) are accommodated; and
- the seating ledge (27) is arranged to be vertically displaceable in the pickup (9) in such a manner that with the sealing ledge (27) in a welding position the negative pressure chamber (31) lies below the bottom surface (BF) of previous packaging.

7. Device according to Claim 4,
**characterised in that**
a brake (14) is arranged on at least the roll (6) which carries the second length of material (8).

8. Device according to Claim 4,
**characterised in that**
the vacuum chamber (42) accommodates a fifth conveyer belt (60) which is composed of a rod mesh.

9. Device according to Claim 4,
**characterised in that**
the first conveyer belt (3) comprises a roller chain which is at least as wide as the lengths of material.

## Revendications

1. Procédé de fabrication d'emballages (45), dans lequel une marchandise à emballer (15) est emballée de manière étanche à l'air par utilisation de vide et par rétraction à chaud d'une matière d'emballage ainsi que par soudage ou scellage d'une ouverture de l'emballage, par les opérations suivantes :
- deux bandes de matière (7, 8) déplaçables en synchronisme sont reliées l'une à l'autre par un premier cordon de soudure (29) s'étendant transversalement aux bandes de matière (7, 8), la première bande de matière (7) servant à la formation des surfaces de fond (BF) et la deuxième bande de matière (8) à la formation des surfaces de recouvrement des emballages,
- la première bande de matière (7) est entrainée et la deuxième bande de matière (8) est entrainée avec elle,
- la marchandise à emballer (15) est déposée sur la première bande de matière (7) derrière le premier cordon de soudure (29),
- les bandes de matières (7, 8) sont reliées l'une à l'autre par un deuxième cordon de soudure (30) s'étendant parallèlement au premier cordon de soudure (29), derrière la marchandise à emballer (15), et
- les bandes de matière (7, 8) sont séparées l'une de l'autre derrière le deuxième cordon de soudure (30),
caractérisé en ce que
- après mise sous vide consécutive, la surface de fond (BF) et la surface de recouvrement (DF) sont reliées l'une à l'autre sur les côtés s'étendant longitudinalement aux bandes de matière (7, 8) par un troisième cordon de soudure (61) et un quatrième cordon de soudure (62) et on effectue la rétraction à chaud, et
- le transfert de mouvement sur la première bande de matière (7) se fait par voie pneumatique par production d'une dépression sur le verso de la première bande de matière au moyen d'un entraîneur agencé de manière à pouvoir coulisser.

2. Procédé selon la revendication 1, caractérisé en ce que, simultanément avec le deuxième cordon de soudure (30) de l'emballage, on effectue le premier cordon de soudure (29) de l'emballage suivant et la séparation des bandes de matière se fait entre le deuxième cordon de soudure (30) de l'emballage et le premier cordon de soudure (29) de l'emballage suivant.

3. Procédé selon la revendication 1, caractérisé en ce que les bandes de matière (7, 8) sont déplacées en leur appliquant un frein.

4. Dispositif pour réaliser le procédé selon la revendication 1, comprenant :
- un dispositif de soudage et de coupe (2),
- au moins une première bande transporteuse (3) pour le transport d'une bande de matière (7) déroulable d'un rouleau (5),
- une deuxième bande de matière (8) déroulable d'un deuxième rouleau (6), et
- une dernière bande transporteuse (44) pour l'évacuation des emballages finis (45),
caractérisé en ce que
- la première bande transporteuse (3) est accouplée à un entraîneur (9) agencé de manière à pouvoir coulisser dans une coulisse (10) du bâti de machine (1), ledit entraineur transportant la première bande de matière (7) afin de la relier à la deuxième bande de matière (8) par un premier cordon de soudure (29) et un deuxième cordon de soudure (30) par déplacement de la première bande transporteuse (3) vers le dispositif de soudage et de coupe (2), l'entraîneur (9) présentant une chambre de dépression (31) qui peut être raccordée à une pompe à vide par un raccord d'aspiration (32) et qui présente des buses d'aspiration (33) qui sont dirigées vers le verso de la première bande de matière (7) s'appliquant sur la première bande transporteuse (3),
- derrière le dispositif de soudage et de coupe (2) est agencée une deuxième bande transporteuse (40) se raccordant à la première bande transporteuse (3) pour prendre en charge les emballages (45) pourvus du premier cordon de soudure (29) et du deuxième cordon de soudure (30) évacués de la première bande transporteuse (3),
- une troisième bande transporteuse (43) se raccordant à la deuxième bande transporteuse (40) est prévue pour transporter les emballages (45) pris en charge par la deuxième bande transporteuse (40) dans un dispositif à vide (42),
- il est prévu dans la chambre à vide (42) des dispositifs de soudage par lesquels les surfaces de fond (BF) et les surfaces de recouvrement (DF) sont reliées les unes aux autres par un troisième cordon de soudure (61) et un quatrième cordon de soudure (62) sur les côtés s'étendant longitudinalement vis-à-vis des bandes de matière (7, 8), et
- la quatrième et dernière bande transporteuse (44) est raccordée au dispositif à vide (42).

5. Dispositif selon la revendication 4, caractérisé en ce que
- dans le bâti de machine (1) est guidé horizontalement un dispositif de coulissement (41) par lequel la deuxième bande transporteuse (40) peut être prolongée ou raccourcie de manière télescopique, et
- la troisième bande transporteuse (43) est agencée de manière que la deuxième bande transporteuse (40) puisse être déplacée au-dessus d'elle au moyen du dispositif de coulissement (41).

6. Dispositif selon les revendications 4 et 5, dans lequel le dispositif de soudage et de coupe (2) présente un barreau de soudage (13) déplaçable verticalement, un barreau d'appui (27) et un couteau (29), caractérisé en ce que
- le barreau de soudage (13) présente deux électrodes de soudage (20, 21), la première électrode de soudage (20) effectuant le premier cordon de soudure (29) d'un emballage et l'autre électrode de soudage (21) effectuant le deuxième cordon de soudure (30) d'un emballage précédent,
- les électrodes de soudage (20, 21) sont guidées dans des rainures (22, 23) du barreau de soudage (13) dans lesquelles des ressorts (24, 25) sont agencés, et
- le barreau d'appui est agencé de manière à pouvoir coulisser verticalement dans l'entraîneur (9) de sorte que, lorsque le barreau d'appui (27) se trouve en position de soudage, la chambre de dépression (31) se trouve sous la surface de fond (BF) d'un emballage précédent.

7. Dispositif selon la revendication 4, caractérisé en ce qu'un frein (14) est agencé au moins sur le rouleau (6) portant la deuxième bande de matière (8).

8. Dispositif selon la revendication 4, caractérisé en ce qu'une cinquième bande transporteuse (60), qui est constituée d'une bande de treillis à barres, est agencée dans la chambre à vide (42).

9. Dispositif selon la revendication 4, caractérisé en ce que la première bande transporteuse (3) est constituée d'une chaîne à rouleaux qui est au moins aussi large que les bandes de matière (7, 8).
